# EUROPÄISCHE PATENTANMELDUNG

(11) **EP 3 166 195 A1**
(43) Veröffentlichungstag der Anmeldung: **10.05.2017**
(21) Anmeldenummer: 16196312.9
(22) Anmeldetag: 28.10.2016
(51) Int. Cl.: H02J 3/32, H01M 8/04828

(54) **VERFAHREN ZUM BETREIBEN EINER ELEKTRISCHEN SPEICHEREINHEIT, SOWIE VERFAHREN ZUM BETREIBEN EINER STROMERZEUGENDEN EINHEIT**

(30) Priorität: 04.11.2015 DE 102015221613
(71) Anmelder: ROBERT BOSCH GMBH, 70442 Stuttgart (DE)
(72) Erfinder: Arnold, Mark, 70839 Gerlingen (DE); Rupp, Linda, 70190 Stuttgart (DE)

(57) **Zusammenfassung**

Die Erfindung betrifft ein Verfahren zum Betreiben einer elektrischen Speichereinheit (12). Es wird Vorgeschlagen, dass eine Leistung (P_{Bat}), mit welcher elektrische Energie gespeichert und/oder bereitgestellt wird, an eine Betriebsweise mindestens einer stromerzeugenden Einheit (23), insbesondere einer Kraft-Wärme-Kopplungsanlage (10), angepasst wird. Es wird auch Vorgeschlagen, dass eine Leistung (P_{Bat}), mit welcher elektrische Energie gespeichert und/oder bereitgestellt wird, zeitabhängig, insbesondere jahreszeitabhängig, angepasst wird. Ferner Betrifft die Erfindung auch Verfahren zum Betreiben einer stromerzeugenden Einheit (23), insbesondere einer Kraft-Wärme-Kopplungsanlage (10), aufweisend mindestens eine elektrische Speichereinheit (12).

## Beschreibung

Die vorliegende Erfindung betrifft ein Verfahren zum Betreiben einer elektrischen Speichereinheit, sowie ein Verfahren zum Betreiben einer stromerzeugenden Einheit, insbesondere einer Kraft-Wärme-Kopplungsanlage, aufweisend mindestens eine elektrische Speichereinheit.

### Stand der Technik

In GB2508577 wird ein Stromerzeugungssystem, welches an einem Stromnetz angeschlossen ist, gezeigt. Das Stromerzeugungssystem umfasst eine Batterie, in welcher Strom gespeichert werden kann, wobei die Speicherung von Strom durch Grenzwerte beschränkt wird.

### Offenbarung der Erfindung

Das erfindungsgemäße Verfahren zum Betreiben einer elektrischen Speichereinheit hat demgegenüber den Vorteil, dass eine Leistung, mit welcher elektrische Energie gespeichert und/oder bereitgestellt wird, an eine Betriebsweise mindestens einer stromerzeugenden Einheit, insbesondere einer Kraft-Wärme-Kopplungsanlage, angepasst wird. Dadurch wird sowohl der Gesamtwirkungsgrad als auch die Lebensdauer der elektrischen Speichereinheit effizient erhöht.

Das erfindungsgemäße Verfahren zum Betreiben einer elektrischen Speichereinheit hat gegenüber dem Stand der Technik auch den Vorteil, dass eine Leistung, mit welcher elektrische Energie gespeichert und/oder bereitgestellt wird, zeitabhängig, insbesondere jahreszeitabhängig, angepasst wird, wodurch der Wirkungsgrad der elektrischen Speichereinheit, insbesondere im Zusammenspiel mit der stromerzeugenden Einheit, effizient erhöht wird. Dadurch wird sowohl der Gesamtwirkungsrad als auch die Lebensdauer der elektrischen Speichereinheit nachhaltig erhöht.

Durch die in den Unteransprüchen aufgeführten Merkmale sind vorteilhafte Ausführungen des erfindungsgemäßen Verfahrens möglich. So entspricht eine bzw. die Betriebsweise einer bzw. der mindestens einen stromerzeugenden Einheit einer verminderten Stromerzeugung, insbesondere einem Sommerbetrieb, und/oder einer erhöhten Stromerzeugung, insbesondere einem Winterbetrieb, der mindestens einen stromerzeugenden Einheit. Auf diese Weise wird eine gezielte Anpassung an die Stromerzeugung, insbesondere die Jahreszeitabhängige Stromerzeugung, ermöglicht.

In einer vorteilhaften Ausführung wird die Leistung mit welcher die elektrische Energie gespeichert und/oder bereitgestellt wird in Abhängigkeit einer von der mindestens einen stromerzeugenden Einheit bereitgestellten Leistung, einer Außentemperatur, eines Datums, einer Prognose und/oder historischer Daten geregelt, wodurch die Anpassung an die Betriebsweise der stromerzeugenden Einheit besonders effizient wird.

Es ist vorteilhaft, wenn die Leistung, mit welcher elektrische Energie gespeichert wird, bei einer verminderten Stromerzeugung nicht begrenzt wird und/oder bei einer erhöhten Stromerzeugung, insbesondere hin zu geringen Leistungen, begrenzt wird. Dadurch kann die elektrische Speichereinheit bei einer Speicherung von elektrischer Energie gezielt in Bereichen höherer Wirkungsgrade betrieben werden, wodurch wiederum der Gesamtwirkungsgrad der elektrischen Speichereinheit erhöht wird.

Ebenso vorteilhaft ist es, wenn die Leistung, mit welcher elektrische Energie bereitgestellt wird, bei einer verminderten Stromerzeugung, insbesondere hin zu hohen Leistungen, begrenzt wird und/oder bei einer erhöhten Stromerzeugung nicht begrenzt wird. Dadurch kann die elektrische Speichereinheit auch bei einer Bereitstellung von elektrischer Energie gezielt in Bereichen höherer Wirkungsgrade betrieben werden, wodurch wiederum der Gesamtwirkungsgrad der elektrischen Speichereinheit erhöht wird.

Besonders vorteilhaft ist es, wenn die Leistung, mit welcher die elektrische Energie gespeichert und/oder bereitgestellt wird, durch mindestens einen vorgebbaren Grenzwert begrenzt wird, wodurch eine Anpassung an die Betriebsweise der stromerzeugenden Einheit anhand von gezielten und/oder kalkulierbaren Vorgaben beeinflusst werden kann.

In einer besonders vorteilhaften Ausführung erfolgt das Verfahren mit nachfolgenden Verfahrensschritten:
a) Ermitteln, ob eine verminderte Stromerzeugung vorliegt;
   a1) Fortfahren mit Verfahrensschritt b), wenn das Ermittelte zutreffend ist;
   a2) Fortfahren mit Verfahrensschritt d), wenn das Ermittelte nicht zutreffend ist;
b) Ermitteln, ob mindestens ein Sollwert mindestens einen vorgebbaren Grenzwert bei eine Speicherung von elektrischer Energie unterschreitet und/oder bei einer Bereitstellung von elektrischer Energie überschreitet;
   b1) Fortfahren mit Verfahrensschritt c), wenn das Ermittelte zutreffend ist;
   b2) Fortfahren mit Verfahrensschritt e), wenn das Ermittelte nicht zutreffend ist;
c) Gleichsetzen der Leistung, mit welcher die elektrische Energie gespeichert und/oder bereitgestellt wird, mit einem oder dem mindestens einen vorgebbaren Grenzwert und Fortfahren mit Verfahrensschritt a);
d) Gleichsetzen der Leistung, mit welcher die elektrische Energie gespeichert und/oder bereitgestellt wird, mit dem mindestens einen Sollwert und Fortfahren mit Verfahrensschritt a).
Dadurch kann eine Anpassung an eine Stromerzeugung einer stromerzeugenden Einheit effizient erfolgen.

In weiteren besonders vorteilhaften Ausführungen erfolgt der Verfahrensschritt a) durch einen Verfahrensschritt
e) Ermitteln, ob die von der stromerzeugenden Einheit bereitgestellte Leistung einen Schwellenwert unterschreitet;
   und/oder
f) Ermitteln, ob die Außentemperatur einen Schwellenwert für die Außentemperatur überschreitet.
   und/oder
g) Ermitteln, ob das Datum einem Tag entspricht, ab dem ein verminderter Leistungsbedarf vorgesehen ist;
   und/oder
h) Ermitteln, ob eine Prognose einen verminderten Leistungsbedarf vorhersagt; und/oder
i) Ermitteln, ob aufgrund von historischen Daten ein verminderter Leistungsbedarf anzunehmen ist;
   und/oder
j) Ermitteln, ob aufgrund von historischen Daten der elektrischen Speichereinheit ein verminderter Leistungsbedarf anzunehmen ist.
Dadurch kann eine Anpassung an eine Stromerzeugung einer stromerzeugenden Einheit besonders effizient erfolgen.

In einer weiteren vorteilhaften Ausführung wird ein oder der mindestens eine vorgebbare Grenzwert manuell vorgegeben und/oder in Abhängigkeit einer von der stromerzeugenden Einheit bereitgestellten Leistung, einer Außentemperatur, eines Datums, einer Prognose und/oder historischer Daten bestimmt, wodurch sowohl eine stufenweise als auch eine dynamische Anpassung ermöglicht wird.

Die Erfindung betrifft auch ein Verfahren zum Betreiben einer stromerzeugenden Einheit, insbesondere einer Kraft-Wärme-Kopplungsanlage, aufweisend mindestens eine elektrische Speichereinheit, wobei die mindestens eine elektrische Speichereinheit nach einem Verfahren gemäß der vorhergehenden Beschreibung betrieben wird.

### Zeichnungen

In den Zeichnungen sind Ausführungsbeispiele der Erfindung schematisch dargestellt und in der nachfolgenden Beschreibung näher erläutert. Es zeigen
- Fig. 1: eine schematische Darstellung einer Kraft-Wärme-Kopplungsanlage,
- Fig. 2: ein Flussdiagramm eines Ausführungsbeispiels eines erfindungsgemäßen Verfahrens,
- Fig. 3: ein Diagramm mit schematischen Verläufen von möglichen Abhängigkeiten mindestens eines vorgebbaren Grenzwerts von der Außentemperatur,
- Fig. 4: ein Diagramm mit schematischen Verläufen von möglichen Abhängigkeiten mindestens eines vorgebbaren Grenzwerts von einer durchschnittlichen Leistung der stromerzeugenden Einheit, und
- Fig. 5: ein Diagramm mit schematischen Verläufen von möglichen Abhängigkeiten mindestens eines vorgebbaren Grenzwerts von einer durchschnittlichen Ladezustand der stromerzeugenden Einheit.

### Beschreibung

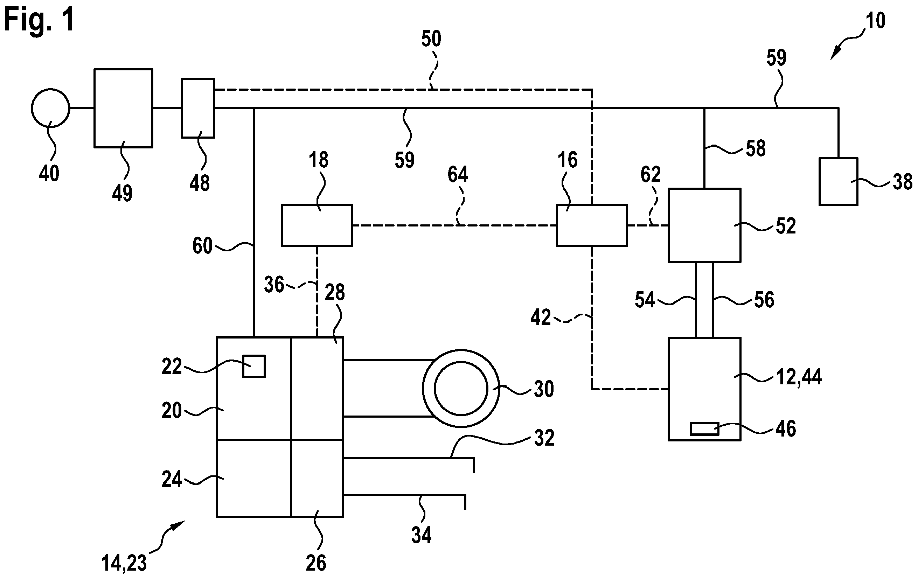

In Fig. 1 ist eine schematische Darstellung einer Kraft-Wärme-Kopplungsanlage 10 gezeigt. Die Kraft -Wärme-Kopplungsanlage 10 weist eine elektrische Speichereinheit 12 und ein Heizsystem 14 auf.

In dem gezeigten Ausführungsbeispiel ist das Heizsystem 14 dazu vorgesehen neben Wärme auch elektrische Energie zu erzeugen. Die elektrische Speichereinheit 12 wiederum ist dazu vorgesehen die von dem Heizsystem erzeugte elektrische Energie zu speichern und/oder bereitzustellen.

Unter einer Speicherung und/oder Bereitstellung von elektrischer Energie mittels der elektrischen Speichereinheit 12 kann auch das Laden und/oder Entladen der elektrischen Speichereinheit 12 verstanden werden.

Ferner umfasst die Kraft-Wärme-Kopplungsanlage 10 eine Regeleinheit 16, welche der mindestens einen elektrischen Speichereinheit 12 zugeordnet ist, und eine Regeleinheit 18, welche dem mindestens einen Heizsystem 14 zugeordnet ist. Dabei sind die Regeleinheit 16, welche der mindestens einen elektrischen Speichereinheit 12 zugeordnet ist, und eine Regeleinheit 18, welche dem mindestens einen Heizsystem 14 zugeordnet ist, kommunikationstechnisch miteinander verbunden.

Alternativ ist es denkbar, dass es sich bei den Regeleinheiten 16, 18 um Steuereinheiten handelt.

Das Heizsystem 14 weist eine Mikro-Kraft-Wärme-Kopplungsanlage 20 auf, mittels welcher die Wärme als auch die elektrische Energie erzeugt wird. Die Mikro-Kraft-Wärme-Kopplungsanlage 20 weist wiederum einen Brennstoffzellenstack 22 auf, durch welchen mittels mindestens einer Brennstoffzelle sowohl die besagte Wärme als auch die besagte elektrische Energie erzeugt wird. Die Kraft-Wärme-Kopplungsanlage 10 kann demnach auch als eine Brennstoffzellenanlage verstanden werden.

Da das Heizsystem 14 neben Wärme auch elektrische Energie erzeugt wird das Heizsystem 14 als stromerzeugende Einheit 23 verstanden. Ebenso kann auch das Gesamtsystem, also die Kraft-Wärme-Kopplungsanlage 10, als Stromerzeugende Einheit verstanden werden.

Des Weiteren weist das Heizsystem 14 einen Pufferspeicher 24 zum Speichern und/oder Bereitstellen von Heizungswasser und einen Brauchwassertank 26 zum Speichern und/oder Bereitstellen von Brauchwasser. Darüber hinaus umfasst das Heizungssystem 14 einen Spitzenlastkessel 28, welcher die Mikro-Kraft-Wärme-Kopplungsanlage 20 bei der Erzeugung von Wärme unterstützt, wenn ein hoher Wärmebedarf vorliegt. Die im Heizsystem 14 erzeugte Wärme wird einem Heizkreis 30 zur Verfügung gestellt.

Das in dem Brauchwassertank 26 gespeicherte Brauchwasser bzw. Warmwasser wird einem Benutzer über eine Brauchwasserleitung 32 zur Verfügung gestellt. Über eine Kaltwasserleitung 34 wird dem Heizsystem 14 zu erwärmendes Kaltwasser für den Brauchwasserbedarf zugeführt.

Die Kraft-Wärme-Kopplungsanlage 10 wird in der Regel wärmegeführt betrieben. Die Erzeugung von Wärme durch das Heizsystem 14 wird mit Hilfe der Regeleinheit 18, welche dem Heizsystem 14 zugeordnet ist, geregelt. So ist das Heizsystem 14 mit der Regeleinheit 18, welche dem Heizsystem 14 zugeordnet ist, über eine Datenverbindung 36 verbunden.

Die Erzeugung von elektrischer Energie richtet sich nach der Erzeugung von Wärme. Die erzeugte elektrische Energie kann, sofern sie nicht durch einen Verbraucher 38 genutzt wird, in ein Stromnetz 40 eingespeist werden.

Durch die im Ausführungsbeispiel gezeigte Kraft-Wärme-Kopplungs-Anlage 10 wird es nun aber auch ermöglicht die erzeugte elektrische Energie in der elektrischen Speichereinheit 12 zwischenzuspeichern und zu einem späteren Zeitpunkt für einen Verbraucher 38 bereitzustellen, anstatt die erzeugte elektrische Energie in das Stromnetz 40 einzuspeisen. Dadurch kann die erzeugte elektrische Energie ökonomisch sinnvoll genutzt werden.

Die Speicherung und/oder Bereitstellung von elektrischer Energie mittels der elektrischen Speichereinheit 12 wird durch die Regeleinheit 16, welche der elektrischen Speichereinheit 12 zugeordnet ist, geregelt. So ist die elektrische Speichereinheit 12 mit der Regeleinheit 16 über eine Datenverbindung 42 verbunden.

Im gezeigten Ausführungsbeispiel handelt es sich bei der elektrische Speichereinheit 12 um eine Batterie 44 mit einem Batterie-Management-System 46. So wird die erzeugte elektrische Energie mittels der Batterie 44 gespeichert und/oder bereitgestellt. Es ist aber auch denkbar, dass die elektrische Speichereinheit mehrere Batterien aufweist.

Das Batterie-Management-System 46 liefert Informationen bzw. Daten über den Ladezustand SOC (State Of Charge) der Batterie 44 und übermittelt sie an die Regeleinheit 16. Der Ladezustand kann beispielsweise über eine Messung der an der Batterie 44 anliegenden Spannung oder über eine Bilanzierung des in die Batterie 44 fließenden Stroms ermittelt werden.

Im gezeigten Ausführungsbeispiel handelt es sich bei der Batterie 44 um eine Lithium-lonen-Batterie. Es ist aber auch denkbar, dass es sich bei der Batterie 44 um eine Blei-, Nickel-Cadmuim-, Metall-Hydrid-, Natrium-Schwefel- oder sonstige Batterie handelt.

Darüber hinaus weist die Kraft-Wärme-Kopplungsanlage 10 einen Energieflussrichtungssensor 48 auf. Dieser ist, bezogen auf eine Einspeisung von elektrischer Energie ins Stromnetz 40, stromtechnisch vor einem Hausanschlusskasten 49 angeordnet, wobei der Hausanschlusskasten 49 eine stromtechnische Schnittstelle zwischen der Kraft-Wärme-Kopplungsanlage 10 und dem Stromnetz 40 darstellt.

Der Energieflussrichtungssensor 48 misst die Energieflussrichtung zwischen der Kraft-Wärme-Kopplungsanlage 10 und dem Stromnetz 40. Zudem ist der Energieflussensor 48 kommunikationstechnisch über eine Datenverbindung 50 mit der Regeleinheit 16, welche der elektrischen Speichereinheit 12 zugeordnet ist, verbunden.

Je nach Signal des Energieflussrichtungssensors 48 wird elektrische Energie mittels der elektrischen Speichereinheit 12 gespeichert oder nicht. Wird elektrische Energie, welche in der Mikro-Kraft-Wärme-Kopplungsanlage 20 erzeugt wird, in das Stromnetz 40 eingespeist, so wird die Leistung der Batterie 44 so lange im Rahmen ihres Leistungsvermögens und ihrer SOC-Begrenzung abgesenkt, bis der Energieflussrichtungssensor 48 wieder den Wert null misst. Wird elektrische Energie aus dem Stromnetz 40 bezogen, wird die Leistung der Batterie 44 im Rahmen ihres Leistungsvermögens und ihrer SOC-Begrenzung angehoben, bis der Energieflussrichtungssensor 48 wieder den Wert null misst. Dabei wird unter einer positiven Leistung der Batterie 44 eine Bereitstellung von elektrischer Energie, also ein Entladen, verstanden, während unter einer negativen Leistung eine Speicherung von elektrischer Energie, also ein Ladenvorgang, verstanden wird. Anstelle des Wertes null kann auch ein anderer definierter Sollwert für den Energieflussrichtungssensor 48 eingestellt werden.

Des Weiteren ist die elektrische Speichereinheit 12 für eine Speicherung und/oder Bereitstellung von elektrischer Energie stromtechnisch mit einem Wechselrichter 52 verbunden. Positiver und der Negativer Anschluss der Batterie 44 sind durch zwei Leitungen 54, 56 mit dem Wechselrichter 52 verbunden.

Der Wechselrichter 52 ist wiederum stromtechnisch über weitere Leitungen 58, 59, 60 mit der Mikro-Kraft-Wärme-Kopplungsanlage 20 und einem möglichen Verbraucher 38 verbunden. Wenn nun elektrische Energie mittels der Batterie 44 gespeichert werden soll, dann kann eine zu speichernde elektrische Energie von einem Wechselstrom in einen Gleichstrom umgewandelt werden. Soll aber für einen Verbraucher 38, beispielsweise in einem Gebäude, elektrische Energie bereitgestellt werden, so kann die bereitzustellende elektrische Energie von einem Gleichstrom in einen Wechselstrom umgewandelt werden. Dementsprechend ist die Regelungseinheit 16, welche der elektrischen Speichereinheit 12 zugeordnet ist, kommunikationstechnisch über eine Datenverbindung 62 mit dem Wechselrichter 52 verbunden.

Wie schon erwähnt ist die Regeleinheit 16, welche der elektrischen Speichereinheit 12 zugeordnet ist, erfindungsgemäß mit der Regeleinheit 18, welche dem Heizsystem 14 zugeordnet ist, kommunikationstechnisch verbunden. Die Verbindung zwischen der Regeleinheit 16, welche der elektrischen Speichereinheit 12 zugeordnet ist, und der Regeleinheit 18, welche dem Heizsystem 14 zugeordnet ist, wird mittels einer Datenverbindung 64 bewerkstelligt.

Im gezeigten Ausführungsbeispiel werden die Datenverbindungen 36, 42, 50, 64 durch jeweils einen Datenbus realisiert. Es ist aber auch denkbar, dass die Datenverbindungen 36, 42, 50, 64 durch mindestens eine herkömmliche Signalleitungen, Netzwerkverbindungen, Internetverbindungen, schnurlose Verbindungen (Funk, WLAN, NFC, Bluetooth, etc.) oder sonstige Verbindungen, welche eine Übertragung gewünschter Daten ermöglichen, realisiert werden. Ebenso ist es denkbar, dass einzelne Bauteile, wie beispielsweise die Regeleinheiten 16, 18, auf mindestens einer Platine angeordnet sind und die Datenverbindungen 36, 42, 50, 64, insbesondere die Datenverbindung 64 zwischen den Regeleinheiten 16, 18, auf der mindestens einen Platine verlaufen. Es ist auch eine hochintegrierte Lösung denkbar, in der die Regeleinheiten 16, 18 miteinander verschmolzen sind und ggf. in einem Computer-artigen System als Software-Lösung realisiert sind.

Das erfindungsgemäße Verfahren zum Betreiben der elektrische Speichereinheit 12 zeichnet sich dadurch aus, dass eine Leistung P_{Bat} mit welcher elektrische Energie gespeichert und/oder bereitgestellt wird, d.h. eine Speicherleistung P_{Bat,Sp} und/oder eine Entladeleistung P_{Bat,Em}, an eine Betriebsweise der stromerzeugenden Einheit 23, bzw. des Heizsystems 14 und/oder der Mikrokraft-Wärme-Kopplungseinheit 20, der Kraft-Wärme-Kopplungsanlage 10 angepasst wird. Dadurch wird die elektrische Speichereinheit 12 kontrolliert und schonend beansprucht, wodurch sowohl der Gesamtwirkungsgrad der Kraft-Wärme-Kopplungsanlage 10 als auch die Lebensdauer der elektrischen Speichereinheit 12 erhöht werden.

Ebenso zeichnet sich das erfindungsgemäße Verfahren zum Betreiben der elektrischen Speichereinheit 12 dadurch aus, dass eine Leistung P_{Bat,sp}, P_{Bat,Ent}, mit welcher elektrische Energie gespeichert und/oder bereitgestellt wird, d.h. ebenso eine Speicherleistung P_{Bat,sp} und/oder eine Entladeleistung P_{Bat,Ent}, zeitabhängig, im gezeigten Ausführungsbeispiel jahreszeitabhängig, angepasst wird, wodurch sowohl der Gesamtwirkungsgrad der Kraft-Wärme-Kopplungsanlage 10 als auch die Lebensdauer der elektrischen Speichereinheit über einen bestimmten Zeitraum zusätzlich nachhaltig erhöht werden.

Alternativ kann das erfindungsgemäße Verfahren zum Betreiben der elektrischen Speichereinheit 12 auch als ein Verfahren zum Betreiben der Kraft-Wärme-Kopplungsanlage 10 verstanden werden.

Die Betriebsweise der stromerzeugenden Einheit 23, bzw. des Heizsystems 14 und/oder der Mikro-Kraft-Wärme-Kopplungsanlage 20, entspricht einer verminderten Stromerzeugung und/oder einer erhöhten Stromerzeugung der mindestens einen stromerzeugenden Einheit 23. Im gezeigten Ausführungsbeispiel der Kraft-Wärme-Kopplungsanlage 10 entspricht der Betrieb einem einer Jahreszeit entsprechenden Betrieb. Hier, einem Sommerbetrieb oder einem Winterbetrieb. So wird eine gezielte Anpassung an einen einer Jahreszeit entsprechenden Betrieb ermöglicht, wodurch der Gesamtwirkungsgrad effizient erhöht wird.

Da im Sommer ein verminderter Wärmebedarf vorliegt und die stromerzeugende Einheit 23 wärmegeführt betrieben wird, kommt es im Sommer zu einer verminderten Stromerzeugung, weshalb unter einem Sommerbetrieb ein Betrieb mit verminderter Stromerzeugung verstanden wird.

Da im Winter wiederum ein erhöhter Wärmebedarf vorliegt und die stromerzeugende Einheit 23 wärmegeführt betrieben wird, kommt es im Winter zu einer erhöhten Stromerzeugung, weshalb unter einem Winterbetrieb ein Betrieb mit erhöhter Stromerzeugung verstanden wird.

Eine Umschaltung in einen jeweiligen Betrieb kann entweder manuell erfolgen, indem ein Benutzer der Kraft-Wärme-Kopplungsanlage 10 vorgibt, dass ein bestimmter Betrieb vorliegt, oder automatisch, wenn eine gemessene Außentemperatur Tₐ einen vorgegebenen Temperaturwert, beispielsweise von 22 °C, überschreitet oder unterschreitet. Ebenso ist es denkbar, dass eine Umschaltung in Abhängigkeit eines Datums, einer Prognose und/oder historischer Daten, bspw. vorgegeben und/oder ermittelt mittels einer Internetverbindung, einer Funkverbindung und/oder intern gespeicherten Datensatzes, bestimmt wird.

Da die stromerzeugende Einheit 23 ein Bestandteil der gezeigten Kraft-Wärme-Kopplungsanlage 10 ist, kann unter einer Betriebsweise der stromerzeugenden Einheit 23 auch eine Betriebsweise der Kraft-Wärme-Kopplungsanlage 10 verstanden werden.

Unter einer Leistung P_{Bat,sp}, P_{Bat,Ent}, mit welcher elektrische Energie gespeichert und/oder bereitgestellt wird, ist eine physikalische Größe zu verstehen, die die in einer Zeitspanne gespeicherte und/oder bereitgestellte Energie bezogen auf diese Zeitspanne bezeichnet. Einfach ausgedrückt kann unter einer verhältnismäßig hohen Leistung insbesondere eine "schnelle" Speicherung von elektrischer Energie verstanden werden, während unter einer verhältnismäßig geringen Leistung insbesondere eine "langsame" Speicherung von elektrischer Energie verstanden werden kann. Eine Leistung P_{Bat,Sp}, mit welcher elektrische Energie gespeichert wird, kann auch als Speicherleistung P_{Bat,Sp} bezeichnet werden, während eine Leistung P_{Bat,Ent}, mit welcher eine elektrische Energie bereitgestellt wird, als Entladeleistung P_{Bat,Ent} bezeichnet werden kann.

Die Leistung P_{Bat,Sp}, P_{Bat,Ent}, mit welcher die elektrische Energie gespeichert und/oder bereitgestellt wird, wird in Abhängigkeit einer von der stromerzeugenden Einheit 23 bereitgestellten Leistung P_{sE}, einer Außentemperatur, eines Datums, einer Prognose und/oder historischer Daten geregelt wird. Dies ermöglicht eine technisch effiziente Anpassung an einen einer Jahreszeit entsprechenden Betrieb.

Für die gezeigt Kraft-Wärme-Kopplungsanlage 10 wird die elektrische Speichereinheit 12 so geregelt, dass die Leistung P_{Bat,sp}, mit welcher elektrische Energie gespeichert wird, bei einer verminderten Stromerzeugung, im Sommerbetrieb, nicht begrenzt und bei einer erhöhten Stromerzeugung, im Winterbetrieb, in der gezeigten Ausführung hin zu geringen Leistungen, begrenzt wird. Durch eine entsprechende Begrenzung der Speicherleistung P_{Bat,Sp} bei hoher Stromerzeugung wird sichergestellt, dass eine Speicherung von elektrischer Energie nicht in einem Randbereich niedriger Speicherleistungen und damit verbundenen geringen Wirkungsgraden erfolgt. Einfach ausgedrückt wird bei einer hohen Stromerzeugung im Winterbetrieb sichergestellt, dass elektrische Energie nicht zu "langsam" gespeichert wird, wodurch nahezu verlustfrei elektrische Energie gespeichert wird. Erreicht der Ladezustand SOC der elektrische Speichereinheit 12 die Kapazitätsgrenze, so wird weitere von der stromerzeugenden Einheit 23 erzeugte elektrische Energie in das Stromnetz 40 eingespeist oder bei Bedarf einem Verbraucher 38 direkt zur Verfügung gestellt.

Demgegenüber wird die Leistung P_{Bat,Ent}, mit welcher elektrische Energie bereitgestellt wird, bei einer verminderten Stromerzeugung, im Sommerbetrieb, im gezeigten Ausführungsbeispiel hin zu hohen Leistungen, begrenzt und bei einer erhöhten Stromerzeugung, im Winterbetrieb, nicht begrenzt. Durch eine entsprechende Begrenzung der Entladeleistung P_{Bat,Ent} bei niedriger Stromerzeugung im Sommerbetrieb wird sichergestellt, dass eine Bereitstellung von elektrischer Energie nicht in einem Randbereich geringer Entladeleistungen und damit verbundenen geringen Wirkungsgraden erfolgt. Einfach ausgedrückt wird bei einer geringen Stromerzeugung im Sommerbetrieb sichergestellt, dass elektrische Energie nicht zu "schnell" bereitgestellt wird, wodurch die Entladung schonender und effizienter erfolgt.

Die Leistung, mit welcher die elektrische Energie gespeichert und/oder bereitgestellt wird, wird durch mindestens einen vorgebbaren Grenzwert GW_{Bat} begrenzt. Für das gezeigte Ausführungsbeispiel wird die Leistung, mit welcher die elektrische Energie gespeichert wird, durch einen vorgebbaren Grenzwert GW_{Bat,sp} begrenzt und die Leistung, mit welcher elektrische Energie bereitgestellt wird, durch einen vorgebbaren Grenzwert GW_{Bat,Ent}. Der Grenzwert entspricht dabei einem Leistungswert. Alternativ wäre es dankbar, dass der vorgebbare Grenzwert einem Stromwert entspricht.

Alternativ ist es aber auch denkbar, dass entweder nur die Leistung, mit welcher die elektrische Energie gespeichert wird, durch einen vorgebbaren Grenzwert GW_{Bat,Sp} begrenzt, oder nur die Leistung, mit welcher elektrische Energie bereitgestellt wird, durch einen vorgebbaren Grenzwert GW_{Bat,Ent} begrenzt wrid.

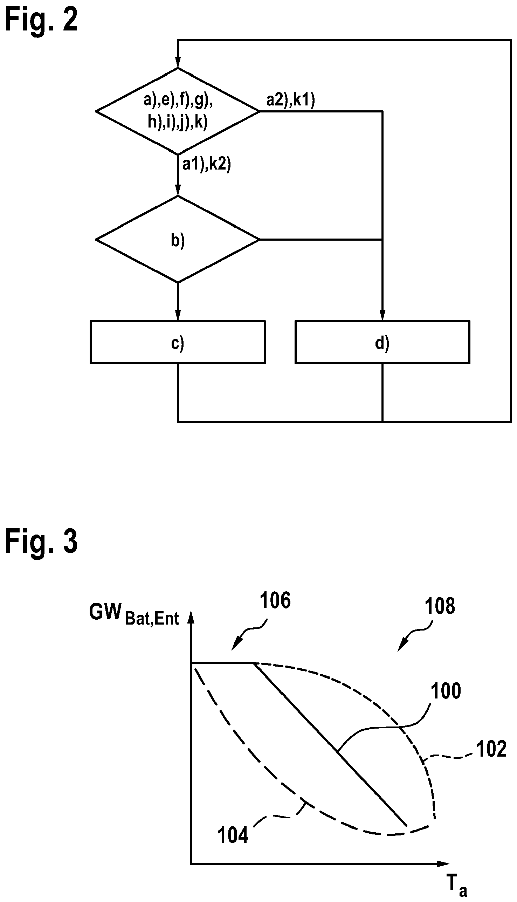

In Fig. 2 ist ein Flussdiagramm eines Ausführungsbeispiels eines erfindungsgemäßen Verfahrens gezeigt. Für das gezeigte Ausführungsbeispiel erfolgt das Verfahren mit nachfolgenden Verfahrensschritten:
a) Ermitteln, ob eine verminderte Stromerzeugung vorliegt;
   a1) Fortfahren mit Verfahrensschritt b), wenn das Ermittelte zutreffend ist;
   a2) Fortfahren mit Verfahrensschritt d), wenn das Ermittelte nicht zutreffend ist;
b) Ermitteln, ob mindestens ein Sollwert P_{Bat,soll} den mindestens einen vorgebbaren Grenzwert GW_{Bat} bei eine Speicherung von elektrischer Energie unterschreitet und/oder bei einer Bereitstellung von elektrischer Energie überschreitet;
   b1) Fortfahren mit Verfahrensschritt c), wenn das Ermittelte zutreffend ist;
   b2) Fortfahren mit Verfahrensschritt e), wenn das Ermittelte nicht zutreffend ist;
c) Gleichsetzen der Leistung P_{Bat}, mit welcher die elektrische Energie gespeichert und/oder bereitgestellt wird, mit einem oder dem mindestens einen vorgebbaren Grenzwert und Fortfahren mit Verfahrensschritt a);
d) Gleichsetzen der Leistung P_{Bat}, mit welcher die elektrische Energie gespeichert und/oder bereitgestellt wird, mit dem mindestens einen Sollwert P_{Bat,soll} und Fortfahren mit Verfahrensschritt a).

So kann eine Anpassung an einen Sommerbetrieb oder einen Winterbetrieb besonders effektiv erfolgen, da durch die Verfahrensschritte a) und b) stets eine Abfrage der tatsächlichen Betriebsweise der stromerzeugenden Einheit 23 erfolgt, während eine Anpassung der Leistung P_{Bat}, mit welcher elektrische Energie gespeichert und/oder bereitgestellt wird, mittels der Verfahrensschritte c) und d) erfolgt.

Das erfindungsgemäße Verfahren wird mittels der Regeleinheit 16, welche der mindestens einen elektrischen Speichereinheit 12 zugeordnet ist durchgeführt. Es ist aber auch denkbar, dass das erfindungsgemäße Verfahren zumindest teilweise mittels der Regeleinheit 18, welche dem mindestens einen Heizsystem 24 zugeordnet ist, und/oder mittels einer Elektronik, welche dem Energieflussrichtungssensors 48 zugeordnet ist, durchgeführt wird. Die für die Durchführung des erfindungsgemäßen Verfahrens benötigten Parameter und/oder Messgrößen können dabei mittels den Datenleitungen 36, 42, 50, 62, 64 zwischen den Einheiten 12, 14, 16, 18, 48, 52 entsprechend ausgetauscht werden.

Im gezeigten Ausführungsbeispiel wird der Sollwert P_{Bat,soll} mittles der Regeleinheit 16, welche der elektrischen Speichereinheit 12 zugeordnet ist, bestimmt. Er wird der elektrischen Speichereinheit 12, bzw. dem Batterie-Management 46, zur Regelung der Speicherung und /oder Bereitstellung von elektrischer Energie vorgegeben. Im Falle einer Speicherung von elektrischer Energie wird der Sollwert P_{Bat,soll} als Speicherleistungssollwert P_{Bat,Sp,soll} bezeichnet. Im Falle einer Bereitstellung von elektrischer Energie wird der Sollwert P_{Bat,soll} als Entladeleistungssollwert P_{Bat,Ent,soll} bezeichnet.

Alternativ ist es aber auch Denkbar, dass der Sollwert P_{Bat,soll} mittels der Regeleinheit 18, welche dem Heizsystem 14 zugeordnet ist, und/oder mittels einer Elektronik, welche dem Energieflussrichtungssensors 48 zugeordnet ist, bestimmt wird.

In dem gezeigten Ausführungsbeispiel erfolgt der Verfahrensschritt a) durch einen Verfahrensschritt
e) Ermitteln, ob die von der stromerzeugenden Einheit 23 bereitgestellte Leistung P_{sE} einen vorgebbaren Schwellenwert P_{sE,schwelle} unterschreitet;
Durch einen derartigen Vergleich der von der stromerzeugenden Einheit 23 bereitgestellten Leistung P_{sE} mit dem vorgebbaren Schwellenwert P_{sE,schwelle} wird eine technisch elegante Ermittlung der momentanen Betriebsweise der stromerzeugenden Einheit ermöglicht. Dabei meint die von der stromerzeugenden Einheit 23 bereitgestellte Leistung die von der stromerzeugenden Einheit 23 bereitgestellte elektrische Leistung P_{sE}. Alternativ kann aber auch die von der stromerzeugenden Einheit bereitgestellte Wärmeleistung gemeint sein.

Da eine verminderte Stromerzeugung - zumindest für das gezeigte Ausführungsbeispiel der Kraft-Wärme-Kopplungsanlage 10 - einem Sommerbetrieb entspricht, kann der Verfahrensschritt a) auch als eine Ermittlung, ob ein Sommerbetrieb vorliegt, verstanden werden.

Unterschreitet in Verfahrensschritt a) die von der stromerzeugenden Einheit 23 bereitgestellten Leistung P_{sE} den vorgebbaren Schwellenwert P_{sE,schwelle} und signalisiert somit eine verminderte Stromerzeugung und damit auch einen verminderten Wärmebedarf, also einen Sommerbetrieb, so wird in Verfahrensschritt b) der Sollwert P_{Bat,soll}, welche der Speicherleistung P_{Bat,Sp} und/oder der Entladeleistung P_{Bat,Ent} entspricht, mit dem mindestens einen vorgebbaren Grenzwert GW_{Bat}, also entsprechend bei einer Speicherung von elektrischer Energie mit dem vorgebbaren Grenzwert GW_{Bat,sp} und/oder bei einer Bereitstellung von elektrischer Energie mit einem vorgebbaren Grenzwert GW_{Bat,Ent}, verglichen.

Überschreitet in Verfahrensschritt a) die von der stromerzeugenden Einheit 23 bereitgestellten Leistung P_{sE} den vorgebbaren Schwellenwert P_{sE,schwelle} und signalisiert somit eine erhöhte Stromerzeugung und damit auch einen erhöhten Wärmebedarf, also einen Winterbetrieb, so wird im Verfahrensschritt d) bei einer Speicherung von elektrischer Energie die Speicherleistung P_{Bat,Sp} mit dem Speicherleistungssollwert P_{Bat,Sp,soll} gleichgesetzt und/oder bei einer Bereitstellung von elektrischer Energie die Entladeleistung P_{Bat,Ent} mit dem Entladeleistungssollwert P_{Bat,Ent,soll} gleichgesetzt.

Unterschreitet in Verfahrensschritt b) der Speicherleistungssollwert P_{Bat,Sp,soll} bei einer Speicherung von elektrische Energie den vorgebbaren Grenzwert GW_{Bat,Sp}, so wird in Verfahrensschritt c) die Leistung P_{Bat,Sp}, mit welcher elektrische Energie gespeichert wird, mit dem vorgebbaren Grenzwert GW_{Bat,sp} gleichgesetzt.

Überschreitet in Verfahrensschritt b) der Speicherleistungssollwert P_{Bat,Sp,soll} bei einer Speicherung von elektrischer Energie den vorgebbaren Grenzwert GW_{Bat,Sp}, so wird in Verfahrensschritt d) die Speicherleistung P_{Bat,Sp} mit dem Speicherleistungssollwert P_{Bat,Sp,soll} gleichgesetzt.

Überschreitet in Verfahrensschritt b) der Entladeleistungssollwert P_{Bat,Ent,soll} bei einer Bereitstellung von elektrische Energie den vorgebbaren Grenzwert GW_{Bat,Ent}, so wird in Verfahrensschritt c) die Leistung P_{Bat,Ent}, mit welcher elektrische Energie gespeichert wird, mit dem vorgebbaren Grenzwert GW_{Bat,sp} gleichgesetzt.

Unterschreitet in Verfahrensschritt b) der Entladeleistungssollwert P_{Bat,Sp,soll} bei einer Bereitstellung von elektrischer Energie den vorgebbaren Grenzwert GW_{Bat,Ent}, so wird in Verfahrensschritt d) die Entladeleistung P_{Bat,Ent} mit dem Entladeleistungssollwert P_{Bat,Ent,soll} gleichgesetzt.

Somit kann in diesem Zusammenhang unter dem Begriff "Gleichsetzen" auch das Begrenzen der Leistung P_{Bat}, mit welcher elektrische Energie gespeichert und/oder bereitgestellt wird, durch und/oder auf einen entsprechenden, vorgebbaren Grenzwert GW_{Bat} verstanden werden.

In einem weiteren Ausführungsbeispiel des erfindungsgemäßen Verfahrens erfolgt der Verfahrensschritt a) durch einen Verfahrensschritt
f) Ermitteln, ob die Außentemperatur Tₐ einen Schwellenwert T_{a,schwelle} für die Außentemperatur überschreitet;
In diesem Ausführungsbeispiel liegt der Schwellenwert T_{a,schwelle} für die Außentemperatur bei einem Wert zwischen 18°C und 24°C, idealerweise bei 22°C.

Wird der Schwellenwert T_{a,schwelle} für die Außentemperatur überschritten, so liegt ein Sommerbetrieb vor und damit auch eine verminderte Stromerzeugung. Entsprechend wird gemäß dem erfindungsgemäßen Verfahren mit Verfahrensschritt b) fortgefahren.

Wird der Schwellenwert T_{a,schwelle} für die Außentemperatur unterschritten, so liegt ein Winterbetrieb vor und damit auch eine erhöhte Stromerzeugung. Entsprechend wird gemäß dem erfindungsgemäßen Verfahren mit Verfahrensschritt d) fortgefahren.

In einem weiteren Ausführungsbeispiel des erfindungsgemäßen Verfahrens erfolgt der Verfahrensschritt a) durch einen Verfahrensschritt
g) Ermitteln, ob das Datum einem Tag entspricht, ab dem ein verminderter Leistungsbedarf vorgesehen ist;
In diesem Ausführungsbeispiel wird das aktuelle Datum mit Kalenderdaten verglichen. Dabei können das Datum und/oder die Kalenderdaten entweder manuell eingestellt werden und/oder über Kommunikationsverbindung, wie beispielsweise eine Internetverbindung, eine Funkverbindung und/oder eine Telefonverbindung, bezogen werden.

Im erläuterten Ausführungsbeispiel können Stichtage, beispielsweise der 01. Juli eines jeden Jahres für einen Anfang der Sommertage und/oder der 01. Oktober eines jeden Jahres für den Anfang von Wintertagen, definiert werden. Die Tage zwischen diesen Stichtagen werden dann entsprechend einem einer Jahreszeit entsprechenden Betrieb, in dem Ausführungsbeispiel entweder einem Sommerbetrieb, d.h. einer verminderten Stromerzeugung, oder einem Winterbetrieb, d.h. einer erhöhten Stromerzeugung, zugeordnet. Durch Vergleich des aktuellen Datums mit dem zugeordneten Tag kann dann ermittelt werden ob ein verminderter Leistungsbedarf vorgesehen ist. Die Definition der Stichtage kann durch eine manuelle Vorgabe erfolgen und/oder über eine Kommunikationsleitung, wie beispielsweise eine Internetverbindung, eine Funkverbindung und/oder eine Telefonverbindung, bezogen werden. Dabei ist es auch Denkbar, dass die Stichtage in Abhängigkeit des aktuellen Wetters oder einer Wetterprognose definiert werden. Daher müssen die Stichtage auch nicht zwingend so definiert sein, dass der Winterbetrieb und der Sommerbetrieb gleichmäßig über das Jahr, also jeweils 6 Monate, ausgedehnt werden. So können die Stichtage so definiert werden, dass sich der Winterbetrieb oder der Sommerbetrieb über unterschiedlich lange Zeiträume erstrecken. Je nach Auslegung der Kraft-Wärme-Kopplungsanlage 10 kann beispielsweise ein Sommerbetrieb auch nur für sehr heiße Tage und/oder der Winterbetrieb nur für sehr kalte Tage erfolgen. So kann auch eine regionale Wetterabhängigkeit berücksichtigt werden.

In einem weiteren Ausführungsbeispiel des erfindungsgemäßen Verfahrens erfolgt der Verfahrensschritt a) durch einen Verfahrensschritt
h) Ermitteln, ob eine Prognose einen verminderten Leistungsbedarf vorhersagt;
In diesem Ausführungsbeispiel wird eine Prognose für die Außentemperatur Tₐ herangezogen um zu ermitteln, ob ein verminderter Leistungsbedarf, d.h. eine verminderte Stromerzeugung, vorliegt. Es ist aber auch denkbar, dass eine Prognose für den Heizwärmebedarf und/oder eine Prognose für den Brauchwasserbedarf herangezogen wird.

In diesem Ausführungsbeispiel wird die Prognose für die Außentemperatur Tₐ über eine Information des Wetterdienstes zur Außentemperatur Tₐ entnommen. Diese wird über eine Kommunikationsleitung, wie beispielsweise eine Internetverbindung, eine Funkverbindung und/oder eine Telefonverbindung, bezogen, könnte aber auch manuell vorgegeben werden.

Eine Prognose über einen Heizwärmebedarf könnte über eine Normheizlast bezogen werden, während eine Prognose über einen Brauchwasserbedarf über einen Normbrauchwasserbedarf bezogen werden könnte. Dabei ist unter einer Normheizlast eine Heizlast zu verstehen, welche unter Normauslegungsbedingungen benötigt wird. Entsprechend ist unter einem Normbrauchwasserbedarf ein Brauchwasserbedarf zu verstehen, welcher unter Normauslegungsbedingungen benötigt wird.

In einem weiteren Ausführungsbeispiel des erfindungsgemäßen Verfahrens erfolgt der Verfahrensschritt a) durch einen Verfahrensschritt
i) Ermitteln, ob aufgrund von historischen Daten der stromerzeugenden Einheit 23 ein verminderter Leistungsbedarf anzunehmen ist;
So wird über einen festgelegten Zeitraum eine durchschnittliche Leistung P_{sE,Durchschnitt} der stromerzeugenden Einheit 23, bzw. der Kraft-Wärme-Kopplungsanlage 10, bestimmt. Beispielsweise kann die durchschnittliche Leistung P_{sE,Durchschnitt} der letzten drei Tage oder der letzten Woche bestimmt werden. Daraufhin kann die durchschnittliche Leistung P_{sE,Durchschnitt} mit dem vorgebbaren Schwellenwert P_{sE,schwelle}, beispielsweise analog zu Verfahrensschritt e), verglichen werden.

In einem weiteren Ausführungsbeispiel des erfindungsgemäßen Verfahrens erfolgt der Verfahrensschritt a) durch einen Verfahrensschritt
j) Ermitteln, ob aufgrund von historischen Daten der elektrischen Speichereinheit 12 ein verminderter Leistungsbedarf anzunehmen ist;
So wird über einen festgelegten Zeitraum zumindest ein durchschnittlicher Ladezustand SOC_{Durchschnitt} der elektrischen Speichereinheit 12, bzw. der Batterie 44, bestimmt. Beispielsweise kann der durchschnittlichen Ladezustand SOC_{Durchschnitt} der letzten drei Tage oder der letzten Woche bestimmt werden. Aufgrund des durchschnittlichen Ladezustandes SOC_{Durchschnitt} der elektrischen Speichereinheit 12 kann dann darauf rückgeschlossen werden, ob momentan ein verminderter Leistungsbedarf und damit eine verminderte Stromerzeugung der stromerzeugenden Einheit 23 angenommen werden kann.

Alternativ ist es auch denkbar, dass anstelle des durchschnittlichen Ladezustand SOC_{Durchschnitt} der elektrischen Speichereinheit die durchschnittlichen Leistung P_{Bat,Durchschnitt} der elektrischen Speichereinheit 12 bestimmt wird. Dabei kann genaugenommen für die Speicherung von elektrischer Energie eine durchschnittliche Speicherleistung P_{Bat,Sp,Durchschnitt} und/oder für die Bereitstellung von elektrischer Energie eine durchschnittliche Entladeleistung P_{Bat,Ent,Durchschnitt} bestimmt werden. Beispielsweise kann die durchschnittliche Leistung P_{Bat,Durchschnitt} der letzten drei Tage oder der letzten Woche bestimmt werden. Aufgrund der durchschnittlichen Leistung P_{Bat,Durchschnitt} der elektrischen Speichereinheit 12 kann dann darauf rückgeschlossen werden, ob momentan ein verminderter Leistungsbedarf und damit eine verminderte Stromerzeugung der stromerzeugenden Einheit 23 angenommen werden kann.

Für die gezeigten und beschriebenen Ausführungsbeispiele des erfindungsgemäßen Verfahrens werden der mindestens eine vorgebbare Grenzwert GW_{Bat}, bzw. die vorgebbaren Grenzwerte GW_{Bat,Sp}, GW_{Bat,Ent}, manuell vorgegeben.

In einem weiteren Ausführungsbeispiel ist es auch denkbar, dass der mindestens eine vorgebbare Grenzwert GW_{Ba}t, bzw. die vorgebbaren Grenzwerte GW_{Bat,Sp}, GW_{Bat,Ent}, in Abhängigkeit einer von der stromerzeugenden Einheit 23 bereitgestellten Leistung P_{sE}, einer Außentemperatur Tₐ, eines Datums, einer Prognose und/oder historischer Daten bestimmt wird. Somit werden der mindestens eine Grenzwert GW_{Ba}t, bzw. die vorgebbaren Grenzwerte GW_{Bat,Sp}, GW_{Bat,Ent} dynamisch an die Betriebsweise der stromerzeugenden Einheit 23, bzw. der Kraft-Wärme-Kopplungsanlage 10, angepasst.

In Fig. 3 ist beispielsweise ein Diagramm mit schematischen Verläufen von möglichen Abhängigkeiten mindestens eines vorgebbaren Grenzwerts GW_{Bat} von der Außentemperatur Tₐ gezeigt. Konkret sind drei mögliche, schematische Kurvenverläufe 100, 102, 104 für den Fall einer Bereitstellung von elektrischer Energie dargestellt, d.h. drei mögliche, schematische Kurvenverläufe 100, 102, 104, welche jeweils eine mögliche Abhängigkeit des vorgebbaren Grenzwerts GW_{Bat,Ent} von der Außentemperatur Tₐ zeigen.

Der Kurvenverlauf 100 zeigt dabei in einem ersten Bereich 106, geringer Außentemperaturen Tₐ, einen konstanten Verlauf und in einem zweiten Bereich 108, höherer Außentemperaturen Tₐ, einen linear abfallenden Verlauf. Die Kurvenverläufe 102, 108 hingegen zeigen einen nichtlinearen Verlauf. So kann der vorgebbare Grenzwert GW_{Bat,Ent} verschiedene Abhängigkeiten von der Außentemperatur Tₐ aufweisen.

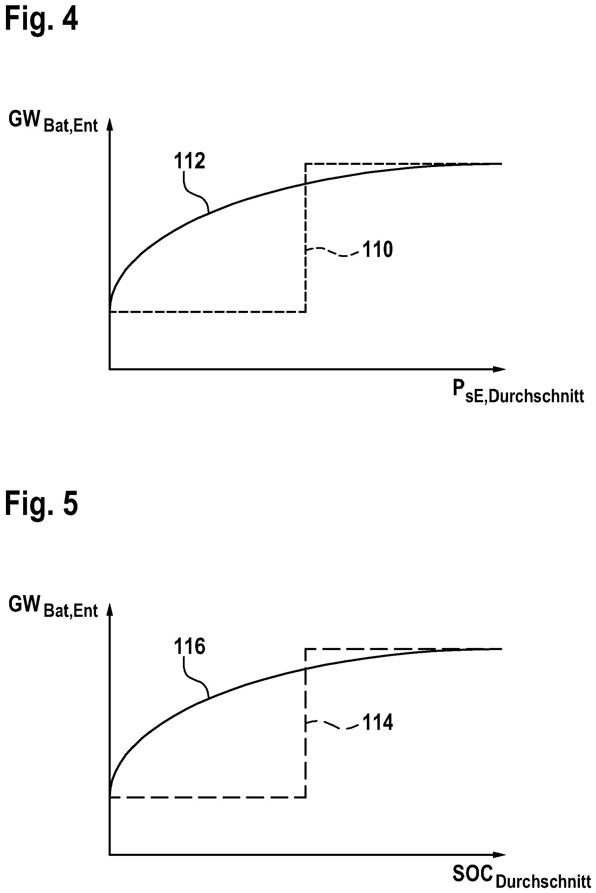

In Fig. 4 ist ein Diagramm mit schematischen Verläufen von möglichen Abhängigkeiten mindestens eines vorgebbaren Grenzwerts GW_{Bat} von einer durchschnittlichen Leistung P_{sE,Durchschnitt} der stromerzeugenden Einheit 23 gezeigt. Die durchschnittlichen Leistung P_{sE,Durchschnitt} der Stromerzeugenden Einheit 23 wurde aus historischen Daten der elektrischen Leistung P_{sE} der stromerzeugenden Einheit 23 bestimmt. Somit kann unter einer Abhängigkeit von historischen Daten auch eine Abhängigkeit von der durchschnittlichen Leistung P_{sE,Durchschnitt} verstanden werden. Konkret sind zwei mögliche, schematische Kurvenverläufe 110, 112 für den Fall einer Bereitstellung von elektrischer Energie dargestellt, d.h. zwei mögliche, schematische Kurvenverläufe 110, 112, welche jeweils eine mögliche Abhängigkeit des vorgebbaren Grenzwert GW_{Bat,Ent} von der durchschnittlichen Leistung P_{sE,Durchschnitt} der stromerzeugenden Einheit 23 zeigen.

Der Kurvenverlauf 110 zeigt dabei einen stufenartigen Verlauf, während der Kurvenverlauf 112 einen kontinuierlichen Verlauf zeigt. Entsprechend kann ein vorgebbarer Grenzwert GW_{Bat} mittels des erfindungsgemäßen Verfahrens sowohl stufenweise als auch kontinuierlich an die Betriebsweise der stromerzeugenden Einheit 23 angepasst werden. So kann der vorgebbare Grenzwert GWBat,Ent verschiedene Abhängigkeiten von der durchschnittlichen Leistung P_{sE,Durchschnitt} aufweisen.

In Fig. 5 ist ein Diagramm mit schematischen Verläufen von möglichen Abhängigkeiten mindestens eines vorgebbaren Grenzwerts GW_{Bat} eines durchschnittlichen Ladezustands SOC_{Durchschnitt} der stromerzeugenden Einheit 23 gezeigt. Der durchschnittliche Ladezustand SOC_{Durchschnitt} der Stromerzeugenden Einheit 23 wurde aus historischen Daten des Ladezustands SOC der stromerzeugenden Einheit 23 bestimmt. Somit kann unter einer Abhängigkeit von historischen Daten auch eine Abhängigkeit von dem durchschnittlichen Ladezustand SOC_{Durchschnitt} verstanden werden. Konkret sind zwei mögliche, schematische Kurvenverläufe 114, 116 für den Fall einer Bereitstellung von elektrischer Energie dargestellt, d.h. zwei mögliche, schematische Kurvenverläufe 114, 116, welche jeweils eine mögliche Abhängigkeit des vorgebbaren Grenzwert GW_{Bat,Ent} von dem durchschnittlichen Ladezustand SOC_{Durchschnitt} der stromerzeugenden Einheit 23 zeigen.

Der Kurvenverlauf 114 zeigt dabei einen stufenartigen Verlauf, während der Kurvenverlauf 112 einen kontinuierlichen Verlauf zeigt. Entsprechend ist auch hier gezeigt, dass ein vorgebbarer Grenzwert GW_{Bat} mittels des erfindungsgemäßen Verfahrens sowohl stufenweise als auch kontinuierlich an die Betriebsweise der stromerzeugenden Einheit 23 angepasst werden kann. So kann der vorgebbare Grenzwert GWBat,Ent verschiedene Abhängigkeiten von dem durchschnittlichen Ladezustand SOC_{Durchschnitt} aufweisen.

In einem alternativen Ausführungsbeispiel, welches von dem erfindungsgemäßen Verfahren ausgeht, ist es auch denkbar, dass die Leistung P_{Bat,Sp}, mit welcher elektrische Energie gespeichert wird, bei einer erhöhten Stromerzeugung, im Winterbetrieb, sowohl hin zu niedrigen Leistungen, beispielsweise durch einen minimalen Grenzwert P_{Bat,Sp,min}, als auch hin zu hohen Leistungen, beispielsweise durch einen maximalen Grenzwert P_{Bat,Sp,max}, begrenzt wird.

In einem weiteren alternativen Ausführungsbeispiel, welches von dem erfindungsgemäßen Verfahren ausgeht, ist es auch denkbar, dass die Leistung P_{Bat,Ent}, mit welcher elektrische Energie bereitgestellt wird, bei einer verminderten Stromerzeugung, im Sommerbetrieb, sowohl hin zu niedrigen Leistungen, beispielsweise durch einen minimalen Grenzwert P_{Bat,Ent,min}, als auch hin zu hohen Leistungen, beispielsweise durch einen maximalen Grenzwert P_{Bat,Ent,max}, begrenzt wird.

In einem weiteren alternativen Ausführungsbeispiel, welches von dem erfindungsgemäßen Verfahren ausgeht, ist es auch denkbar, dass der Verfahrensschritt a), sowie die Verfahrensschritte a1) und a2), mit folgenden Verfahrensschritten erfolgen:
k) Ermitteln, ob eine erhöhte Stromerzeugung vorliegt;
   k1) Fortfahren mit Verfahrensschritt d), wenn das Ermittelte zutreffend ist;
   k2) Fortfahren mit Verfahrensschritt b), wenn das Ermittelte nicht zutreffend ist;
Ferner kann Verfahrensschritt j) analog zu dem erläuterten Verfahrensschritt e) bis i) erfolgen, wobei diese in logischer Weise an die Ermittlung, ob eine erhöhte Stromerzeugung vorliegt, anzupassen sind. Da eine erhöhte Stromerzeugung - zumindest für das gezeigte Ausführungsbeispiel der Kraft-Wärme-Kopplungsanlage 10 - einem Winterbetrieb entsprechen würde, könnte der Verfahrensschritt j) auch als eine Ermittlung, ob ein Winterbetrieb vorliegt, verstanden werden.

## Patentansprüche

1. Verfahren zum Betreiben einer elektrischen Speichereinheit (12), **dadurch gekennzeichnet, dass** eine Leistung (P_{Bat}), mit welcher elektrische Energie gespeichert und/oder bereitgestellt wird, an eine Betriebsweise mindestens einer stromerzeugenden Einheit (23), insbesondere einer Kraft-Wärme-Kopplungsanlage (10), angepasst wird.

2. Verfahren zum Betreiben einer elektrischen Speichereinheit (12), insbesondere nach Anspruch 1, **dadurch gekennzeichnet, dass** eine Leistung (P_{Bat}), mit welcher elektrische Energie gespeichert und/oder bereitgestellt wird, zeitabhängig, insbesondere jahreszeitabhängig, angepasst wird.

3. Verfahren zum Betreiben einer elektrischen Speichereinheit (12) nach einem der Ansprüche 1 oder 2, **dadurch gekennzeichnet, dass** eine und/oder die Betriebsweise einer und/oder der mindestens einen stromerzeugenden Einheit (23) einer verminderten Stromerzeugung, insbesondere einem Sommerbetrieb, und/oder einer erhöhten Stromerzeugung, insbesondere einem Winterbetrieb, der mindestens einen stromerzeugenden Einheit (23) entspricht.

4. Verfahren zum Betreiben einer elektrischen Speichereinheit (12) nach einem der Ansprüche 1 bis 3, **dadurch gekennzeichnet, dass** die Leistung (P_{Bat}), mit welcher die elektrische Energie gespeichert und/oder bereitgestellt wird, in Abhängigkeit einer von der mindestens einen stromerzeugenden Einheit (23) bereitgestellten Leistung (P_{sE}), einer Außentemperatur (Tₐ), eines Datums, einer Prognose und/oder historischer Daten geregelt wird.

5. Verfahren zum Betreiben einer elektrischen Speichereinheit (12) nach einem der Ansprüche 1 bis 4, **dadurch gekennzeichnet, dass** die Leistung (P_{Bat,Sp}), mit welcher elektrische Energie gespeichert wird, bei einer verminderten Stromerzeugung nicht begrenzt wird und/oder bei einer erhöhten Stromerzeugung, insbesondere hin zu geringen Leistungen, begrenzt wird.

6. Verfahren zum Betreiben einer elektrischen Speichereinheit (12) nach einem der Ansprüche 1 bis 5, **dadurch gekennzeichnet, dass** die Leistung (P_{Bat,Ent}), mit welcher elektrische Energie bereitgestellt wird, bei einer verminderten Stromerzeugung, insbesondere hin zu hohen Leistungen, begrenzt wird und/oder bei einer erhöhten Stromerzeugung nicht begrenzt wird.

7. Verfahren zum Betreiben einer elektrischen Speichereinheit (12) nach einem der Ansprüche 1 bis 6, **dadurch gekennzeichnet, dass** die Leistung (P_{Bat}), mit welcher die elektrische Energie gespeichert und/oder bereitgestellt wird, durch mindestens einen vorgebbaren Grenzwert (GW_{Bat}) begrenzt wird.

8. Verfahren zum Betreiben einer elektrischen Speichereinheit (12) nach einem der Ansprüche 1 bis 7, **dadurch gekennzeichnet, dass** das Verfahren mit nachfolgenden Verfahrensschritten erfolgt:
a) Ermitteln, ob eine verminderte Stromerzeugung vorliegt;
a1) Fortfahren mit Verfahrensschritt b), wenn das Ermittelte zutreffend ist;
a2) Fortfahren mit Verfahrensschritt d), wenn das Ermittelte nicht zutreffend ist;
b) Ermitteln, ob mindestens ein Sollwert (P_{Bat,soll}) mindestens einen vorgebbaren Grenzwert (GW_{Bat}) bei eine Speicherung von elektrischer Energie unterschreitet und/oder bei einer Bereitstellung von elektrischer Energie überschreitet;
b1) Fortfahren mit Verfahrensschritt c), wenn das Ermittelte zutreffend ist;
b2) Fortfahren mit Verfahrensschritt e), wenn das Ermittelte nicht zutreffend ist;
c) Gleichsetzen der Leistung, mit welcher die elektrische Energie gespeichert und/oder bereitgestellt wird, mit einem oder dem mindestens einen vorgebbaren Grenzwert (GW_{Bat}) und Fortfahren mit Verfahrensschritt a);
d) Gleichsetzen der Leistung, mit welcher die elektrische Energie gespeichert und/oder bereitgestellt wird, mit dem mindestens einen Sollwert (P_{Bat,soll}) und Fortfahren mit Verfahrensschritt a).

9. Verfahren zum Betreiben einer elektrischen Speichereinheit (12) nach Anspruch 8, **dadurch gekennzeichnet, dass** der Verfahrensschritt a) durch einen Verfahrensschritt
e) Ermitteln, ob die von der stromerzeugenden Einheit bereitgestellte Leistung einen Schwellenwert (P_{sE,schwelle}) unterschreitet;
und/oder
f) Ermitteln, ob die Außentemperatur (Tₐ) einen Schwellenwert für die Außentemperatur(T_{a,schwelle}) überschreitet.
und/oder
g) Ermitteln, ob das Datum einem Tag entspricht, ab dem ein verminderter Leistungsbedarf vorgesehen ist;
und/oder
h) Ermitteln, ob eine Prognose einen verminderten Leistungsbedarf vorhersagt; und/oder
i) Ermitteln, ob aufgrund von historischen Daten der stromerzeugenden Einheit (23) ein verminderter Leistungsbedarf anzunehmen ist;
und/oder
j) Ermitteln, ob aufgrund von historischen Daten der elektrischen Speichereinheit (12) ein verminderter Leistungsbedarf anzunehmen ist;
erfolgt.

10. Verfahren zum Betreiben einer elektrischen Speichereinheit (12) nach einem der Ansprüche 1 bis 9, **dadurch gekennzeichnet, dass** ein oder der mindestens eine vorgebbare Grenzwert (GW_{Bat}) manuell vorgegeben wird und/oder in Abhängigkeit einer von der stromerzeugenden Einheit bereitgestellten Leistung (P_{sE}), einer Außentemperatur(Tₐ), eines Datums, einer Prognose und/oder historischer Daten bestimmt wird.

11. Verfahren zum Betreiben einer stromerzeugenden Einheit (23), insbesondere einer Kraft-Wärme-Kopplungsanlage (10), aufweisend mindestens eine elektrische Speichereinheit (12), **dadurch gekennzeichnet, dass** die mindestens eine elektrische Speichereinheit (12) nach einem Verfahren gemäß der Ansprüche 1 bis 10 betrieben wird.
